# EUROPEAN PATENT SPECIFICATION

(11) **EP 2 193 156 B1**
(45) Date of publication and mention of the grant of the patent: **27.08.2014**
(21) Application number: 08834605.1
(22) Date of filing: 23.09.2008
(51) Int. Cl.: C08G 63/20, C08J 3/00, C08K 3/18

(54) **LIQUID COLOR CONCENTRATE FOR POLYESTER ARTICLES**
FLÜSSIGFARBENKONZENTRAT FÜR POLYESTER-ARTIKEL
CONCENTRÉ DE COULEUR LIQUIDE POUR ARTICLES EN POLYESTER

(30) Priority: 24.09.2007 US 974616 P
(43) Date of publication of application: 09.06.2010
(73) Proprietor: PolyOne Corporation, Avon Lake, OH 44012 (US)
(72) Inventor: RAJARAMAN, Hari, Hudson Ohio 44236 (US)
(74) Representative: Winter, Brandl, Fürniss, Hübner, Röss, Kaiser, Polte - Partnerschaft mbB
(86) International application number: PCT/US2008/077311
(87) International publication number: WO 2009/042564

(56) References cited:
- EP-A1- 0 985 752
- WO-A1-02/48237
- WO-A1-2005/097872
- WO-A1-2005/116109
- WO-A1-2006/095627
- DE-A1- 2 828 552
- US-A- 4 049 615
- US-A- 4 107 133
- US-A- 4 233 206
- US-A- 4 250 078
- US-A- 5 271 759
- US-A1- 2002 115 817
- US-A1- 2004 254 330

## Description

### FIELD OF THE INVENTION

This invention relates to use of a liquid polymer as a carrier for colorants used as a concentrate for making colored polyester articles.

### BACKGROUND OF THE INVENTION

Plastic has taken the place of other materials in a variety of industries. In the packaging industry, plastic has replaced glass to minimize breakage, reduce weight, and reduce energy consumed in manufacturing and transport. In other industries, plastic has replaced metal to minimize corrosion, reduce weight, and provide color-in-bulk products.

Attracting consumers to purchase individually-sized or family-sized containers includes branding and trade dress. Among the elements of valuable trade dress is the color of the container. Moreover, such color may need to co-exist with translucency, transparency, or other special effects for the bottle.

Liquid colorants are being extensively used to color polyester (such as polyethylene terephthalate or PET) articles, such as beverage bottles. Many of the applications in PET are tints and have very low loading of colorants. Some existing products base their carrier on a blend of sorbitan mono-oleate and dioctyl adipate. In many tint applications, this carrier system yields liquid dispersions with low viscosity. Unfortunately, liquid products with low viscosity have a poor shelf life, because the colorants tend to settle, and this could lead to color variation in blow molded PET bottles.

To counteract shelf life problems, often thickeners based on silica are added to the liquid color concentrate to increase viscosity. But these silica-based thickeners are difficult to process and control of viscosity during processing becomes difficult.

WO 02/48237 A1 discloses a method for the introduction of additives into a process for making condensation polymers such as polyesters, wherein a reactive carrier which reacts with the condensation polymers is employed as a delivery vehicle for the additives. The reactive carrier includes esters, amides, polyetherpolyols such as polyethylene glycol, acids and anhydrides and has a molecular weight of less than 10,000 g/mol. Additives for use in this method may include antioxidants and colorants, but preferred additives are UV absorbers, inert particulate additives and exfoliated clay nanocomposites.

WO 2005/09782 A1 describes specific polyesters containing carboxylic groups for use as dispersing agents for pigment concentrates.

WO 2005/116109 A1 describes water reducible polyester resins comprising the reaction product of a polyalkylene glycol monoalkyl ether, polyarboxylic acids and polyhydric alcohols.. These polyester resins may be used in aqueous coating compositions containing color-giving pigments.

US 2004/0254330 A1 describes an esterification process that comprises contacting, in the presence of a catalyst and a toner, a carbonyl compound and an alcohol. US 2002/0115817 A1 describes copolyesters comprising the reaction product of aromatic and aliphatic dicarboxylic acids and isosorbide. These copolyesters may contain colorants and dyes.
EP 0 985 752 A1 discloses a process for producing copolyester fibers comprising reacting, optionally in the presence of colorants, terephthalic acid and a C₂₋₄ alkylene glycol. US 4,250,078 discloses the preparation of polyesters that are colored by copolymerization with anthraquinone dyes. DE 28 28 552 A1 discloses a process for the preparation of matted polyesters of terephtahlic acid and polyethylene glycols, wherein the light stability of the polyesters is improved by the addidion of phosphoric acid esters.
WO 2006/095627 A1 discloses cationic dyeable polyester fibers comprising isophthalate and polyalkylene moieties.

### SUMMARY OF THE INVENTION

What the art needs is a liquid carrier for color concentrates for polyester articles that has sufficient viscosity to forestall shelf life problem and avoid the use of silica-based thickeners.

The present invention solves the problem in the art by using a liquid polyethylene glycol as a carrier for color concentrates for polyester articles.

One aspect of the invention is a color concentrate for polyester articles, comprising: (a) colorant; (b) a liquid carrier for the colorant; and optionally (c) at least one functional additive, wherein the colorant is a pigment, a dye, a combination of pigments, a combination of dyes, a combination of pigments and dye, a combination of pigment and dyes, or a combination of pigments and dyes and is present in the concentrate in an amount ranging from 2 to 40 weight percent, and wherein said liquid carrier for the colorant is polyethylene glycol having a weight average molecular weight of 200 to 400 and wherein the polyethylene glycol is present in the concentrate in an amount ranging from 60 to 98 weight percent.

One feature of the present invention is that compounding the color concentrate of the present invention using polyethylene polyol as the carrier permits proper viscosity for good processing and storage and also permits letdown into the compounding equipment, via a fluid addition to the equipment.

Another feature of the present invention is that the colorant can include pigment(s), dye(s), or both as needed by the polymer engineer and product designer to achieve desired color effects.

Other features will become apparent from a description of the embodiments of the invention.

### EMBODIMENTS OF THE INVENTION

### Liquid Carrier for the Colorant

The liquid carrier is a polyethylene glycol having a weight average molecular weight ranging from 200 to 400, and most preferably of about 200, which is why the preferred polyethylene glycol product is referred to as PEG 200.

The polyethylene glycol is present in the concentrate in an amount ranging from 60 to 98 weight percent, for example from 60 to 95 weight percent.

The liquid polymer can have a glass transition temperature ranging from -15°C to 100°C, and preferably from 10°C to 60°C and most preferably about 25°C.

Non-limiting examples of commercially available polyethylene glycol include Pluracol E200 from BASF and Lumulse PEG 200 brand polyethylene glycol from Lambent Technologies of Gurnee, IL, USA. These branded products are offered to the market as PEGs. Of them, Lumulse PEG 200 is particularly preferred, because polyethylene glycol is particularly compatible with polyesters such as polyethylene terephthalate (PET), polytrimethylene terephthalate (PTT), and polybutylene terephthalate (PBT).

### Colorant

As explained above, colorant can be a pigment, a dye, a combination of pigments, a combination of dyes, a combination of pigments and dye, a combination of pigment and dyes, or a combination of pigments and dyes. The choice of colorants depends on the ultimate color desired by the designer for the plastic article.

The colorant is present in the concentrate in an amount ranging from 2 to 40 weight percent, for example from 5 to 40 weight percent and preferably from 10 to 40 weight percent.

The science of color is well known to those skilled in the art. Without undue experimentation, one can use color matching techniques to identify a particular location in spherical color space. For example, one skilled in the art can use the teachings of PCT Patent Application US2004/012233 to digitally map color space using specific polymer carriers and colorants as raw material ingredients. Alternatively, one can make small samples called plaques for visual review.

Colorants are commercially available from a number of sources well known to those skilled in the art. Commercially available pigments are well known to those skilled in the art and include organic and inorganic colorant chemistries. Commercially available dyes are well known to those skilled in the art and include all organic chemistries. Commercial sources for pigments and dyes include multinational companies such as BASF, Bayer, Ciba-Geigy, Color-Chem International, Sun Chemical, Zhuhai Skyhigh Chemicals; and others identified at Internet Web Sites such as http://www.colorpro.com/info/vendors/colorant.html and http://dir.yahoo.com/Business and Economy/Business to Business/Chemical s and Allied Products/Pigments and Dyes/

Table 1 lists 8 commercially available pigment colorants in a variety of primary and secondary colors, 5 chromatics, 2 blacks, and 1 white.

| **Table 1** | | | | |
|---|---|---|---|---|
| **Commercial Pigment Colorants** | | | | |
| **Raw Material Name** | **CI_Name** | **Family** | **COLOR** | **FDA *** |
| TIOXIDE R-FC6 WHITE | PIGMENT WHITE 6 | INORGANIC | WHITE | Y |
| REGAL 660R BLACK POWDER | PIGMENT BLACK 7 | ORGANIC | | N |
| MPC CHANNEL BLACK | PIGMENT BLACK 7 | ORGANIC | | Y |
| HELIOGEN BLUE K7090 | PIGMENT BLUE 15:3 | ORGANIC | BLUE | Y |
| Heliogen Blue K6903 | PIGMENT BLUE B 15:1 | ORGANIC | BLUE | Y |
| 34L2000 AZURE BLUE | PIGMENT BLUE 28 | INORGANIC | BLUE | Y |
| SICOTAN YELLOW K 2001 FG | PIGMENT BROWN 24 | INORGANIC | YELLOW | Y |
| SICOTAN YELLOW K 1011 | PIGMENT YELLOW 53 | INORGANIC | YELLOW | Y |

| | | | | |
|---|---|---|---|---|
| * As publicized by the commercial producer or as tested by the applicant, or both. | | | | |

Table 2 shows 14 commercially available dyes.

| **Table 2** | | | | |
|---|---|---|---|---|
| **Commercial Dye Colorants** | | | | |
| **Raw Material Name** | **CI Name** | **Family** | **Color** | **FDA** * |
| Lambdaplast Blue NL | Solvent Blue 59 | Anthraquinone | Blue | N |
| Macrolex Blue RR Granular | Solvent Blue 97 | Anthraquinone | Blue | N |
| Macrolex Green G Granular | Solvent Green 28 | Anthraquinone | Green | N |
| Macrolex Green 5B Granular | Solvent Green 3 | Anthraquinone | Green | N |
| Macrolex Orange R Granular | Disperse Orange 47 | Polymethine | Orange | N |
| Macrolex Orange 3G Granular | Solvent Orange 60 | Perinone | Orange | N |
| Macrolex Red EG Granular | Solvent Red 135 | Perinone | Red | N |
| Macrolex Red E2G Granular | Solvent Red 179 | Perinone | Red | N |
| Thermoplast Red 454 | Solvent Red 195 | Anthraquinone | Red | N |
| Macrolex Red Violet R Granular | Disperse Violet 26 | Anthraquinone | Violet | N |
| Macrolex Violet B Granular | Solvent Violet 13 | Anthraquinone | Violet | N |
| Macrolex Violet 3R Granular | Solvent Violet 36 | Anthraquinone | Violet | N |
| Key Plast Yellow 3G | Solvent Yellow 93 | Pyrazolone | Yellow | N |
| Key Plast Yellow AG | Solvent Yellow 114 | Quinophthalone | Yellow | N |

| | | | | |
|---|---|---|---|---|
| * As publicized by the commercial producer or as tested by the applicant, or both. | | | | |

Preferably, colorants include colorants intended for transparent or translucent plastic polyester articles, although colorants intended for opaque plastic articles are not excluded from consideration.

Achievement of a color match of a plaque with a desired color from the creativity of a designer or a pre-arranged color standard such as Pantone^{®} color standards from an inventory of commercially available colorants is relatively straightforward for a skilled color matcher, even if a few iterations are required to satisfy the customer.

The concentration of colorant into a carrier is significant because of the relative cost of the colorant ingredient(s) and the need for that color to consistently and precisely mix and disperse into the carrier and then to consistently and precisely dilute into the plastic resin and other compound ingredients during "letdown" of the concentrate in mixing equipment prior to formation of the pre-form embryonic bottles or other articles. Letdown ratios depend on the concentration of colorant in the color concentrate and whether the final molded product is intended to be opaque, translucent, or transparent.

Concentration of concentrate after letdown into the final molded product can range from about 0.05 to about 0.2 weight percent, and preferably from about 0.1 to about 0.5 weight percent.

The mixing equipment used to make the liquid color concentrate can be any suitable equipment already used in the art of making liquid color. For example, such equipment includes high speed "Cowles" type dispersors, media mills, three-roll mills and rotor-stator type dispersors

Mixing equipment can operate at mixing speeds ranging from about 100 rpm to about 10,000 rpm, and preferably from about 500 to about 8000 rpm. Mixing equipment can operate at temperatures ranging from about 25°C to about 100°C, and preferably from about 40°C to about 80°C.

### Optional Functional Additives

Additives to improve processing or performance of the concentrate of the present invention or the polyester compound, or both, can be added according to preferences of this skilled in the art. For example, functional additives for polyester bottles can include anti-oxidants, anti-stats, acetaldehyde scavengers, blowing agents, biocides, exfoliated nanoclays, thickeners, and the like. Generally, minor amounts of such additives provide improvement of performance to the color concentrate during processing with the other ingredients in the polyester resin or in performance of the polyester molded article after manufacturing. One skilled in the art without undue experimentation can determine the appropriate concentration.

Frequently, the preparation of a colored plastic article does not involve merely color but also special effect features, such as Granite, Translucent, Pearls, Metallics, Fluorescents, Iridescents, Marbles, etc.

Non-limiting examples of such additives are commercially available from PolyOne Corporation of Avon Lake, Ohio, USA (www.polyone.com) and marketed under the following brands: OnColor FX colorants, PolyOne colorants, etc.

Plastic articles exposed to natural sunlight are exposed to ultraviolet rays that can harm the color of the article. Therefore, it is customary but not required to include ultraviolet light stabilizers in the color concentrate. This optional additive being included in the color concentrate adds value to that concentrate as a masterbatch in polymer compounding because the ultraviolet stabilizer also helps protect the polymer resin from adverse effects arising from exposure to the ultraviolet rays. Being included in a masterbatch as an additive makes the introduction of the stabilizer easier, due to better dispersion.

Commercially available stabilizers are well known to those skilled in the art and include thermal stabilizers and Tinuvin brand stabilizers from Ciba-Geigy of Berne, Switzerland. Of the choice of stabilizers, Tinuvin brand stabilizers are preferred, particularly Tinuvin 234 stabilizer.

The optional functional additives may be present in the color concentrates of the invention in a range from 0 to 20 weight percent, desirably from 0 to 10 weight percent, and preferably from 0 to 5 weight percent.

### USEFULNESS OF THE INVENTION

Color concentrates of the present invention can be letdown into plastic resins and other ingredients useful for making molded or extruded articles in ratios ranging from about 0.01% to about 2.0%, and preferably from about 0.15% to about 0.50%.

As stated previously, the plastic resins can be any polyester, but especially PET.

The plastic article can be opaque, translucent, or transparent even though it has color from concentrates of the present invention. Precise color matching and consistent metering of color in amounts as little as 0.08 weight percent of concentrate can be achieved.

Other embodiments appear in the examples.

### EXAMPLES

Table 3 shows an example of the invention compared with a typical commercial sample. Both were made by milling, using a three roll mill of lab scale size. The viscosity of the two experiments is also reported.

| **Table 3** | | |
|---|---|---|
| **Ingredient** | **1** | **Comp. A** |
| Macrolex Violet B dye from Lanxess | 1.33% | 1.33% |
| Macrolex Blue RR dye from Lanxess | 0.88% | 0.88% |
| Cab-O-Sil M5 silica thickener from Cabot Corporation | 1.0% | 3.0% |
| Sorbitan Mono-Oleate carrier from Uniqema | | 47.39% |
| Dioctyl adipate carrier from Harwick Standard | | 47.40% |
| PEG 200 carrier from Lambent Technologies | 96.79% | |
| Viscosity (cps) according to Brookfield Viscometer, RV Type, Spl#5, 10 rpm | 1000 | 400 |

The viscosity of Example 1 is superior by 2.5 times over Comparative Example A, for good shelf life and ease of pumping.

Molding trials were conducted by having bottles blown from the combination of 99.95 weight percent PET resin with 0.05 weight percent of the Example 1 color concentrate. The bottles had good clarity and acceptable color. A single stage Aoki PET stretch blow molding machine was employed for this purpose. The melt temperature at the blow molding machine was around 274°C.

The invention is not limited to the above embodiments. The claims follow.

## Claims

1. A color concentrate for coloring polyester articles, comprising:
(a) colorant;
(b) a liquid carrier for the colorant; and
optionally (c) at least one functional additive;
wherein the colorant is a pigment, a dye, a combination of pigments, a combination of dyes, a combination of pigments and dye, a combination of pigment and dyes, or a combination of pigments and dyes and is present in the concentrate in an amount ranging from 2 to 40 weight percent, and
wherein said liquid carrier for the colorant is polyethylene glycol having a weight average molecular weight of 200 to 400 and wherein the polyethylene glycol is present in the concentrate in an amount ranging from 60 to 98 weight percent.

2. The concentrate of Claim 1, wherein the polyethylene glycol has a glass transition temperature ranging from 10°C to 60°C.

3. The concentrate of Claim 1, wherein the polyethylene glycol has a glass transition temperature ranging from 25°C to 35°C.

4. The concentrate of Claim 1, wherein the colorant is present in the concentrate in an amount ranging from 5 to 40 weight percent, and wherein the optional functional additive is present, if at all, in an amount ranging up to 5 weight percent.

5. A plastic article, comprising a concentrate of any of Claims 1-4 let down into a polyalkylene terephthalate resin.

6. The article of Claim 5, wherein the weight of concentrate in the polyalkylene terephthalate resin ranges from 0.01 weight percent to 2.0 weight percent.

7. The article of Claim 6, wherein the polyester article is opaque, translucent, or transparent.

8. The article of Claim 7, wherein the polyester article is optically clear.

9. Use of a concentrate of any of Claims 1-4 in polyester resins to form colored polyester articles.

10. Use according to Claim 9, wherein the polyester resin is a polyalkylene terephthalate resin.

11. Use according to Claim 10, wherein the weight of concentrate in the polyalkylene terephthalate resin ranges from 0.01 weight percent to 2.0 weight percent.

12. Use according to Claim 9, wherein the polyester article is opaque, translucent, or transparent.

## Patentansprüche

1. Farbkonzentrat zum Einfärben von Polyesterartikeln, umfassend:
(a) Farbmittel;
(b) einen flüssigen Träger für das Farbmittel; und wahlweise
(c) wenigstens einen funktionellen Zusatzstoff;
wobei das Farbmittel ein Pigment, ein Farbstoff, eine Kombination von Pigmenten, eine Kombination von Farbstoffen, eine Kombination von Pigmenten und Farbstoff, eine Kombination von Pigment und Farbstoffen oder eine Kombination von Pigmenten und Farbstoffen ist und in dem Konzentrat in einer Menge im Bereich von 2 bis 40 Gewichtsprozent vorliegt, und
wobei der flüssige Träger für das Farbmittel Polyethylenglycol mit einem gewichtsmittleren Molekulargewicht von 200 bis 400 ist und wobei das Polyethylenglycol in dem Konzentrat in einer Menge im Bereich von 60 bis 98 Gewichtsprozent vorliegt.

2. Konzentrat nach Anspruch 1, wobei das Polyethylenglycol eine Glasübergangstemperatur im Bereich von 10°C bis 60°C aufweist.

3. Konzentrat nach Anspruch 1, wobei das Polyethylenglycol eine Glasübergangstemperatur im Bereich von 25°C bis 35°C aufweist.

4. Konzentrat nach Anspruch 1, wobei das Farbmittel in dem Konzentrat in einer Menge im Bereich von 5 bis 40 Gewichtsprozent vorliegt und wobei der wahlweise funktionelle Zusatzstoff, falls überhaupt, in einer Menge von bis zu 5 Gewichtsprozent vorliegt.

5. Kunststoffartikel umfassend, eingelassen in ein Polyalkylenterephthalatharz, ein Konzentrat nach einem der Ansprüche 1-4.

6. Artikel nach Anspruch 5, wobei das Gewicht von Konzentrat in dem Polyalkylenterephthalatharz im Bereich von 0,01 Gewichtsprozent bis 2,0 Gewichtsprozent liegt.

7. Artikel nach Anspruch 6, wobei der Polyesterartikel opak, transluzent oder transparent ist.

8. Artikel nach Anspruch 7, wobei der Polyesterartikel optisch klar ist.

9. Verwendung eines Konzentrats nach einem der Ansprüche 1-4 in Polyesterharzen zur Bildung gefärbter Polyesterartikel.

10. Verwendung nach Anspruch 9, wobei das Polyesterharz ein Polyalkylenterephthalatharz ist.

11. Verwendung nach Anspruch 10, wobei das Gewicht von Konzentrat in dem Polyalkylenterephthalatharz im Bereich von 0,01 Gewichtsprozent bis 2,0 Gewichtsprozent liegt.

12. Verwendung nach Anspruch 9, wobei der Polyesterartikel opak, transluzent oder transparent ist.

## Revendications

1. Concentré de couleur pour colorer des articles en polyester, ledit concentré comprenant :
(a) un colorant ;
(b) un vecteur liquide pour le colorant ; et
éventuellement (c) au moins un additif fonctionnel ;
dans lequel le colorant est un pigment, une matière colorante, une combinaison de pigments, une combinaison de matières colorantes, une combinaison de pigments et d'une matière colorante, une combinaison d'un pigment et de matières colorantes, ou une combinaison de pigments et de matières colorantes et est présent dans le concentré en une quantité allant de 2 à 40 % en poids, et
dans lequel ledit vecteur liquide pour le colorant est le polyéthylène glycol ayant une masse moléculaire moyenne en poids de 200 à 400 et dans lequel le polyéthylène glycol est présent dans le concentré en une quantité allant de 60 à 98 % en poids.

2. Concentré selon la revendication 1, dans lequel le polyéthylène glycol a une température de transition vitreuse allant de 10°C à 60°C.

3. Concentré selon la revendication 1, dans lequel le polyéthylène glycol a une température de transition vitreuse allant de 25°C à 35°C.

4. Concentré selon la revendication 1, dans lequel le colorant est présent dans le concentré en une quantité allant de 5 à 40 % en poids, et dans lequel l'additif fonctionnel facultatif est présent, le cas échéant, en une quantité pouvant atteindre jusqu'à 5 % en poids.

5. Article en plastique, comprenant un concentré selon l'une quelconque des revendications 1 à 4, dilué dans une résine téréphtalate de polyalkylène.

6. Article selon la revendication 5, dans lequel le poids du concentré dans la résine téréphtalate de polyalkylène se situe entre 0,01 % en poids et 2,0 % en poids.

7. Article selon la revendication 6, dans lequel l'article en polyester est opaque, translucide, ou transparent.

8. Article selon la revendication 7, dans lequel l'article en polyester est optiquement clair.

9. Utilisation d'un concentré selon l'une quelconque des revendications 1 à 4, dans des résines polyester pour former des articles en polyester coloré.

10. Utilisation selon la revendication 9, dans laquelle la résine polyester est une résine téréphtalate de polyalkylène.

11. Utilisation selon la revendication 10, dans laquelle le poids du concentré dans la résine téréphtalate de polyalkylène se situe entre 0,01 % en poids et 2,0 % en poids.

12. Utilisation selon la revendication 9, dans laquelle l'article en polyester est opaque, translucide, ou transparent.
